# EUROPEAN PATENT SPECIFICATION

(11) **EP 2 711 865 B1**
(45) Date of publication and mention of the grant of the patent: **26.10.2016**
(21) Application number: 13184732.9
(22) Date of filing: 17.09.2013
(51) Int. Cl.: G06K 7/10

(54) **IC Card, portable electronic device and reader/ writer for IC Card**
IC-Karte, tragbare elektronische Vorrichtung und Lese-/Schreibvorrichtung
Carte CI, dispositif électronique portable et dispositif de lecture/écriture pour carte CI

(30) Priority: 20.09.2012 JP 2012206827
(43) Date of publication of application: 26.03.2014
(73) Proprietor: Kabushiki Kaisha Toshiba, Tokyo 105-8001 (JP)
(72) Inventor: Nozaki, Masahiro, Tokyo 105-8001 (JP)
(74) Representative: Hoffmann Eitle

(56) References cited:
- EP-A1- 2 299 383
- FR-A1- 2 881 007
- US-B1- 6 354 500
- FINKENZELLER KLAUS ED - FINKENZELLER K: "RFID Handbook , Passages", 31 December 2003 (2003-12-31), RFID HANDBOOK: FUNDAMENTALS AND APPLICATIONS IN CONTACTLESS SMART CARDS AND IDENTIFICATION,SECOND EDITION, JOHN WILEY & SONS, LTD, PAGE(S) 176,205 - 219,274, XP002604143, ISBN: 978-0-470-84402-1 * page 208 - page 211 * * *

## Description

### FIELD

An embodiment of the present invention relates a reader/writer for IC card.

### BACKGROUND

Generally, an IC card is provided with a card-shaped main body formed of plastic etc. and an IC module embedded in the main body. The IC module has an IC chip. The IC chip has a nonvolatile memory, such as an EEPROM (Electrically Erasable Programmable Read-Only Memory) and a flash ROM, which is capable of holding data even in a condition that there is no electric power source, and a CPU (Central Processing Unit) which performs various operations.

The IC card conforms to the International Standards ISO/IEC7816 and ISO/IEC14443, for example. The IC card is excellent in portability, and is capable of performing communication with an external device and performing complicated arithmetic processing. In addition, since the IC card is difficult to forge, it is assumed that the IC card is used for a security system, electronic commerce, etc. storing high confidential information etc.

The IC card that is capable of performing transmission and reception of data by non-contact communication has generally spread in recent years. The IC card that performs non-contact communication has an IC chip and an antenna. The IC card receives a magnetic field emitted from a reader/writer of an IC card processing device and operates with an electric power generated at the antenna in the IC card by electromagnetic induction. In addition, when the IC card receives a command from the IC card processing device by non-contact communication, the IC card executes an application in accordance with the command received. Thereby, the IC card can realize various functions.

The IC card processing device transmits an initial response request command by wireless communication. When the IC card receives the initial response request command, the IC card generates an initial response that is a response to the initial response request command, and transmits the initial response generated to the processing device. The IC card processing device can recognize that the IC card exists within a communicable range of the IC card processing device by receiving the initial response.

In addition, the IC card processing device performs an anticollision in order to recognize a plurality of IC cards that exist within the communicable range of the IC card processing device. In this case, the IC card processing device sets up a plurality of time slots, and transmits an initial response request command and an anticollision command to the IC cards. The IC card generates a random number, selects a slot in accordance with the random number generated and transmits an initial response for the initial response request command to the IC card processing device in the slot selected. Thereby, the processing device is capable of receiving initial responses from the plurality of IC cards.

FINKENZELLER KLAUS ED - FINKENZELLER K: "RFID Handbook, Passages", 31 December 2003 (2003-12-31), RFID HANDBOOK: FUNDAMENTALS AND APPLICATIONS IN CONTACTLESS SMART CARDS AND IDENTIFICATION, SECOND EDITION, JOHN WILEY & SONS, LTD, PAGE(S) 176,205 - 219,274, XP002604143, ISBN: 978-470-84402-1 discloses a slotted ALOHA procedure.

EP 2 299 381 A1 discloses mobile electronics devices which send a response by a slotted marker method. US 6 354 500 B1 discloses a method of communicating with a plurality of contactless data carriers and a contactless data carrier for use in communicating with a base station.

There is a demand to transmit the same commands to a plurality of IC cards from an IC card processing device and to make the IC cards perform processing, in issuing the IC card. However, a conventional IC card performs the processing after establishing one-to-one communication with the processing device. For this reason, the IC card processing device needs to communicate with the plurality of IC cards individually, and to make the IC card perform command processing. For this reason, a problem that long processing time is required arises.

### BRIEF DESCRIPTION OF THE DRAWINGS

Fig. 1 is a drawing for explaining an IC card processing system concerning one embodiment;
Fig. 2 is a drawing for explaining an IC card concerning one embodiment;
Fig. 3 is a drawing for explaining processing of the IC card concerning one embodiment;,
Fig. 4 is another drawing for explaining processing of the IC card concerning one embodiment;
Fig. 5 is a drawing for explaining a functional structure of the terminal device concerning one embodiment; and
Fig. 6 is a drawing for explaining a functional structure of the IC card concerning one embodiment.

### DETAILED EMBODIMENT

According to the embodiment, an IC card performs a non-contact communication with an external device. The IC card is provided with a receiving section, a command processing section and a transmitting section. The receiving section receives a command transmitted from the external device. The command processing section performs command processing based on the command received by the receiving section and generates a response when the receiving section receives the command. The transmitting section transmits the response to the external device in one time slot out of the plurality of time slots in which data is transmitted to the external device.

Hereinafter, an IC card, a portable electronic device and a reader/writer for IC card concerning an embodiment will be explained in detail with reference to drawings. In a following explanation, the IC card is used as the portable electronic device.

The IC card 20 and the processing device (terminal device) 10 which processes the IC card 20 concerning the embodiment possess a function of a non-contact communication defined by ISO/IEC14443 etc., for example. Thereby, the IC card 20 and the terminal device 10 are capable of performing transmission and reception of data mutually.

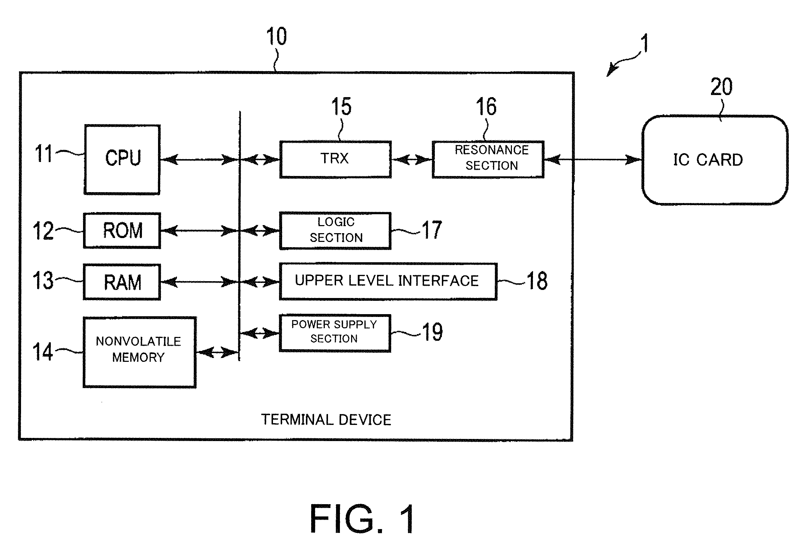

Fig. 1 shows an example of composition of an IC card processing system 1 concerning one embodiment.

The IC card processing system 1 is provided with the IC card 20 and the terminal device 10 that processes the IC card 20. As described above, the terminal device 10 and the IC card 20 transmit and receive various data each other by non-contact communication. The terminal device 10 is a reader/writer for IC card that transmits a command to an IC card by non-contact communication, and makes the IC card perform command processing, for example.

The terminal device 10 is provided with a CPU 11, an ROM (Read-Only Memory) 12, an RAM (Random Access Memory) 13, a nonvolatile memory 14, a transmission and reception section 15, a resonance section 16, a logic section 17, an upper level interface 18, and a power supply section 19. The CPU 11, the ROM 12, the RAM 13, the nonvolatile memory 14, the transmission and reception section 15, the resonance section 16, the logic section 17, and the upper level interface 18 are mutually connected via a bus, respectively.

The CPU 11 performs as a control section that manages control of the terminal device 10 whole. The CPU 11 performs various processing in accordance with a control program and control data which are stored in the ROM 12 or the nonvolatile memory 14. For example, the CPU 11 performs transmission of a command to the IC card 20 and reception of a response from the IC card 20 via the transmission and reception section 15 and the resonance section 16.

The ROM 12 is a nonvolatile memory that stores the control program, the control data, etc. beforehand. The RAM 13 is a volatile memory that performs as a working memory. The RAM 13 stores data under processing of the CPU 11 etc. temporarily. For example, the RAM 13 stores temporarily data to transmit to the external device via the transmission and reception section 15 and the resonance section 16. The RAM 13 stores temporarily data received from the external device via the transmission and reception section 15 and the resonance section 16. In addition, the RAM 13 stores temporarily a program that the CPU 11 executes.

The nonvolatile memory 14 is provided with a semiconductor memory, such as EEPROM, for example. The nonvolatile memory 14 stores a control program, control data, a program for application, and data for the application, for example.

The transmission and reception section 15 and the resonance section 16 are interface devices for communicating with the IC card 20.

The transmission and reception section 15 performs signal processing to data to be transmitted and data received, by the resonance section 16. For example, the transmission and reception section 15 performs encoding, decoding, modulation and demodulation. The transmission and reception section 15 supplies encoded and modulated data to the resonance section 16.

The resonance section 16 has an antenna that has a predetermined resonance frequency, for example. The resonance section 16 generates a magnetic field in accordance with data supplied from the transmission and reception section 15. Thereby, the terminal device 10 can transmit the data by non-contact to the IC card 20 that exists within a communicable range of the terminal device 10.

In addition, the resonance section 16 detects a magnetic field and generates data in accordance with the magnetic field detected. Thereby, the resonance section 16 can receive the data by non-contact. The resonance section 16 supplies the data received to the transmission and reception section 15. The transmission and reception section 15 performs demodulation and decoding on the data received by the resonance section 16. Thereby, the terminal device 10 can acquire original data transmitted from the IC card 20.

The logic section 17 performs predetermined arithmetic processing. For example, the logic section 17 performs arithmetic processing, such as encryption of data, decryption of data and generation of a random number, in accordance with control of the CPU 11.

The upper level interface 18 is an interface for communicating with an upper level terminal. The upper level terminal is provided with an operating section, a display section, etc., for example. The operating section is provided with an operation keyboard etc., for example, and generates an operation signal in accordance with an operation that is inputted by an operator. The display section displays various kind of information. The upper level interface 18 receives data from the upper level terminal, and transmits it to the CPU 11. The upper level interface 18 may be a composition that transmits data acquired from the IC card 20 to the upper level terminal by the transmission and reception section 15 and the resonance section 16.

The power supply section 19 supplies electric power to each section of the terminal device 10.

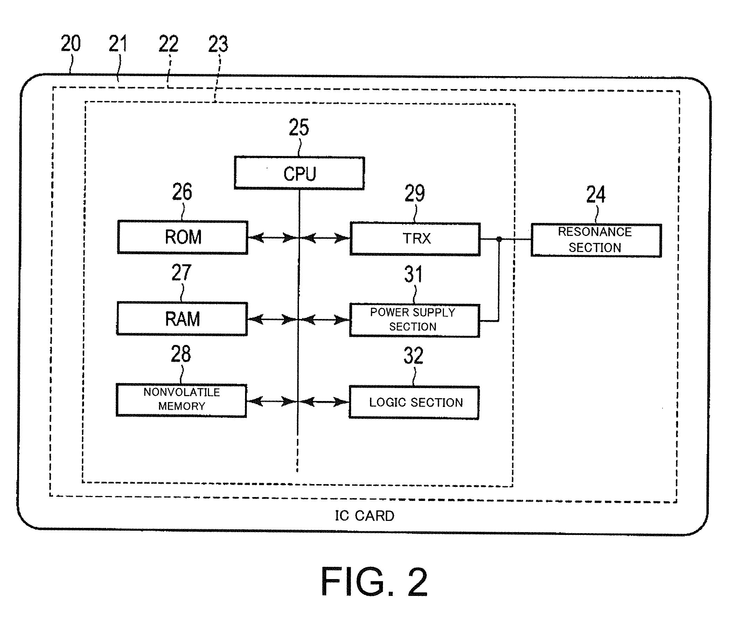

Fig. 2 shows an example of composition of the IC card 20 concerning one embodiment. The IC card 20 is provided with a rectangular main body 21 and a IC module 22 built in the main body 21, for example, as shown in Fig. 2. The IC module 22 is provided with an IC chip 23 and a resonance section (antenna) 24. The IC chip 23 and the resonance section 24 are connected mutually within the IC module 22.

If at least the IC module 22 having the resonance section 24 can be installed in the main body 21, a shape of the main body 21 may not be restricted to a rectangle, but may be what kind of shape. That is, a portable electronic device other than the IC card can be constituted.

The IC chip 23 is provided with a CPU 25, a ROM 26, a RAM 27, a nonvolatile memory 28, a transmission and reception section 29, a power supply section 31, a logic section 32, etc. The CPU 25, the ROM 26, the RAM 27, the nonvolatile memory 28, the transmission and reception section 29, the power supply section 31, and the logic section 32 are mutually connected via a bus.

The resonance section 24 is an interface for communicating with the resonance section 16 of the terminal device (external device) 10. The resonance section 24 is provided with an antenna coil of a predetermined shape constituted by a metal wire allocated in the IC module 22, for example.

The IC card 20 generates a magnetic field with an antenna coil in accordance with data to transmit to the terminal device 10. Thereby, the IC card 20 can transmit the data to the terminal device 10. In addition, the IC card 20 recognizes data transmitted from the terminal device 10 based on an induced current generated in the antenna coil by electromagnetic induction.

The CPU 25 performs as a control section that manages control of the IC card 20 whole. The CPU 25 performs various processing in accordance with a control program and control data which are stored in the ROM 26 or the nonvolatile memory 28. For example, the CPU 25 performs various processing in accordance with a command received from the terminal device 10, and generates data of a processing as a result.

The ROM 26 is a nonvolatile memory which stores a control program, control data, etc. beforehand. The control program, the control data, etc. are built in the ROM 26 at a manufacturing stage thereof. That is, the control program and the control data in accordance with specification of the IC card 20 are built in the ROM 26 beforehand.

The RAM 27 is a volatile memory that performs as a working memory. The RAM27 stores data under processing of the CPU 25 etc. temporarily. For example, the RAM 27 stores temporarily data received from the terminal device 10 via the resonance section 24. And, the RAM 27 stores temporarily data to be transmitted to the terminal device 10 via the resonance section 24. In addition, the RAM 27 stores temporarily a program that the CPU 25 executes.

The nonvolatile memory 28 is provided with a nonvolatile semiconductor memory that is writable and rewritable of data, such as an EEPROM, for example. The nonvolatile memory 28 stores a control program and various data in accordance with an employment use of the IC card 20. For example, the nonvolatile memory 28 stores a control program, control data, an application program, personal information, security information such as an encryption key, data used for application, etc.

For example, a program file, a data file, etc. are created in the nonvolatile memory 28. The control program, the various data, etc. are written in each created file. The CPU 25 can realize various processing by executing the program stored in the nonvolatile memory 28 or the ROM 26.

The transmission and reception section 29 performs signal processing, such as encoding and load modulation, to data to be transmitted to the terminal device 10. For example, the transmission and reception section 29 performs modulation (amplification) of the data to be transmitted to the terminal device 10. The transmission and reception section 29 transmits the data to which signal processing has been performed, to the resonance section 24.

In addition, the transmission and reception section 29 performs demodulation and decoding to a signal received by the resonance section 24. For example, the transmission and reception section 29 analyzes the signal received by the resonance section 24. Thereby, the transmission and reception section 29 acquires a logical data of binary. The transmission and reception section 29 transmits an analyzed data to the CPU 25 via the bus.

The power supply section 31 generates electric power based on an electric wave (for example, a carrier wave) received by the resonance section 24. The power supply section 31 generates an operation clock. The power supply section 31 supplies the electric power and the operation clock that were generated to each section of the IC card 20. When each section of the IC card 20 is supplied with the electric power, each section of the IC card 20 will be in the state where it can operate.

The logic section 32 is an operation section that performs arithmetic processing by hardware. For example, the logic section 32 performs processing, such as encryption, decryption, generation of a random number in accordance with a command from the terminal device 10. For example, when the IC card 20 receives a mutual recognition command from the terminal device 10, the logic section 32 generates a random number and transmits the random number generated to the CPU 25.

The IC card 20A issued through a primary issue and a secondary issue issues. An issuing device that issues the IC card 20 initializes the nonvolatile memory 28 of the IC card 20 by transmitting an initialization command as a command to the IC card 20 in the primary issue. Thereby, the terminal device 10 that is the issuing device defines a key file, a data file, etc. according a purpose of usage, an application, etc. of the IC card 20, in the nonvolatile memory 28 of the IC card 20.

The issuing device creates a file structure defined by ISO/IEC7816 in the nonvolatile memory 28 of the IC card 20, for example. The nonvolatile memory 28 to which the above-mentioned initialization was performed has a Master File (MF), a Dedicated File (DF), an Elementary File (EF), etc.

The MF is a file that becomes the basis of a file structure. The DF is created in a lower level of the MF. The DF is a file in which an application program and a data that is used for the application program, etc. are grouped and are stored. The EF is created in a lower level of the DF. The EF is a file for storing various data. In addition, the EF may be located directly under the MF.

As for the EF, there are kinds, such as Working Elementary File (WEF), Internal Elementary File (IEF). The WEF is a working EF and stores personal information and the like. The IEF is an internal EF, and stores data of an encryption key for security etc., for example.

Individual data, such as customer data, is stored in the EF in the secondary issue. By this means, the IC card 20 becomes in a condition that it can be used. That is, the CPU 25 can realize the various processing by executing the program stored in the nonvolatile memory 28 or the ROM 26.

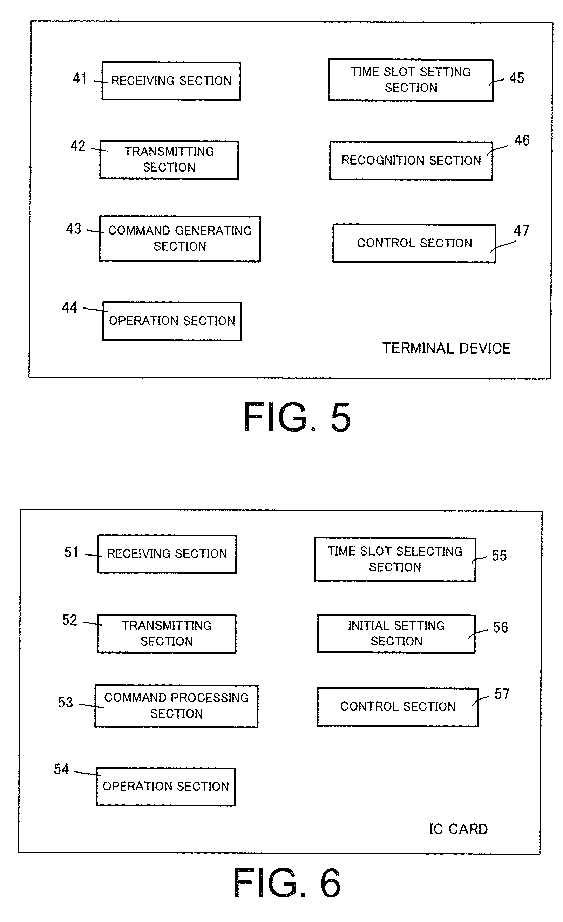

The terminal device 10 includes a receiving section 41, a transmitting section 42, a command generating section 43, an operation section 44, a time slot setting section 45, and a recognition section 46 and a control section 47 as a functional structure, for example, as shown in Fig. 5. The command generating section 43 generates a command that is executed by the IC card. The transmitting section 42 transmits the command to a plurality of IC cards within a communicable range of the terminal device 10. The time slot setting section 45 sets up a plurality of time slots with which a response from the IC card can be received. The receiving section 41 receives the response transmitted from the IC card. The recognition section 46 recognizes the IC card that transmitted the response based on the time slot with which the response was received.

The IC card includes a receiving section 51, a transmitting section 52, a command processing section 53, an operation section 54, a time slot selecting section 55, and an initial setting section 56 and a control section 57 as functional structure, as shown in Fig. 6. The receiving section 51 receives a command transmitted from the external device. The command processing section 53 performs command processing based on a command and generates a response when the receiving section receives the command. The transmitting section 52 transmits a response to the external device by one time slot out of a plurality of time slots that can transmit data to the external device. The time slot selecting section 55 generates a random number and selects one time slot out of the plurality of the time slots in accordance with the random number generated when the receiving section receives an initial response request command. The initial setting section 56 performs initial setting in accordance with an initial response request command.

The terminal device 10 generates an initial response request command to be transmitted by the resonance section 16, in order to detect the IC card 20. That is, the terminal device 10 includes the command generating section 43 that generates a command to be executed by the IC card. In this embodiment, the terminal device 10 performs an anticollision by a time slot method.

The terminal device 10 transmits an initial response request command to the IC card 20 which directs the IC card 20 to perform the anticollision by the time slot method.

The initial response request command has a plurality of parameters for determining a communication method, speed, etc. The initial response request command includes, in this parameter, information that shows the number (the total number n of time slots) of time slots in which the terminal device 10 can receive a response to the initial response request command. That is, the terminal device 10 includes the time slot setting section 45 that sets up a plurality of time slots in which a response from the IC card can be received.

That is, the terminal device 10 sets up a plurality of time slots, and transmits an initial response request command that has information showing the total number of time slots to the IC card 20.

When the CPU 25 of the IC card 20 receives the initial response request command, the CPU 25 of the IC card 20 analyzes the initial response request command, and recognizes the total number of time slots set up by the terminal device 10. The CPU 25 generates a random number by the logic section 32. The CPU 25 selects one time slot based on the random number generated. That is, the IC card includes a time slot selecting section 55 which generates a random number and selects one time slot out of the plurality of the time slots in accordance with the random number generated when the receiving section 51 receives the initial response request command. The CPU 25 stores selected time slot information that shows the selected time slot in the nonvolatile memory 28. When the IC card 20 is reset, or when the IC card 20 transmits an initial response again to the terminal device 10, the IC card 20 updates successively so that selected time slot information may turn into the newest information.

The CPU 25 of the IC card 20 generates an initial response to the initial response request command. That is, the IC card includes an initial setting section 56 that performs initial setting in accordance with the initial response request command, and generates the initial response. The initial response includes identification information (PUPI, for example) for making the terminal device identify the IC card 20

The IC card 20 transmits the initial response to the terminal device 10 in the selected time slot. That is, when the IC card 20 receives the initial response request command, the IC card 20 selects a time slot at random and transmits the initial response to the terminal device 10 in the time slot selected. That is, the IC card includes a transmitting section 52 that transmits the response to the external device in one time slot out of a plurality of time slots in which data can be transmitted to the external device.

The terminal device 10 analyzes the initial response when the terminal device 10 receives the initial response from the IC card 20. Thereby, the terminal device 10 recognizes the identification information of the IC card 20. In addition, the terminal device 10 can recognize the time slot that the IC card 20 selected. Thus, the terminal device 10 performs the anticollision that makes each IC card reply an initial response at timing different for every IC card 20. By performing such the anticollision, the terminal device 10 can avoid that the plurality of the IC cards 20 transmit the responses at the same timing.

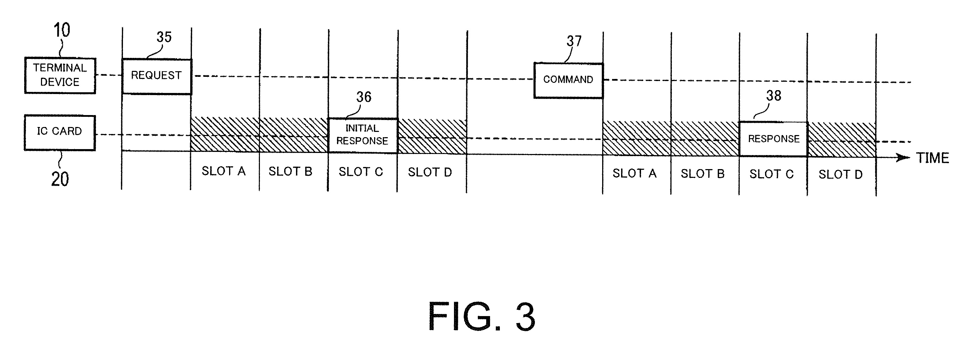

Fig. 3 shows an example of processing performed by the terminal device 10 and the IC card 20. The terminal device 10 transmits an initial response request command 35 in space at a predetermined interval. When the IC card 20 enters within a communicable range of the resonance section 16 of the terminal device 10, the IC card 20 will be activated and be in an idle state. Further, the IC card 20 receives the initial response request command 35. In addition, when other IC card 20 exists in a communicable space of the terminal device 10, the other IC card 20 can receive the initial response request command 40 simultaneously.

Here, it is supposed that the IC card 20 selected a third time slot (slot C) out of a first time slot to a fourth time slot, for example. In this case, the IC card 20 generates an initial response 36 and transmits the initial response 36 to the terminal device 10 in the time slot (slot C) selected. In addition, the IC card 20 stores information that shows the slot C as selected time slot information in the nonvolatile memory 28. The IC card 20 can recognize the first time slot to the fourth time slot by counting a lapsed time after receiving the command.

The terminal device 10 recognizes the IC card 20 in a communicable space of the terminal device 10 based on the initial response. In addition, the terminal device 10 transmits a command 37 that is a usual processing command to the IC card 20 in the communicable space of the terminal device 10.

The IC card 20 receives the command 37 transmitted from the terminal device 10. The IC card 20 performs processing, that is command processing, in accordance with the command 37 received. Further, the IC card 20 generates a response 38 against to the command 37 based on a result of the command processing. The IC card 20 transmits the response 38 to the terminal device 10 in the time slot selected when the IC card 20 received the initial response request command. That is, the IC card 20 transmits the response 38 to the terminal device 10 in the time slot that the selected time slot information stored in the nonvolatile memory 28 shows.

When the terminal device 10 receives the initial response 36, the terminal device 10 associate the identification information of the IC card 20 and the time slot, and stores them as correspondence information. Thereby, when the terminal device 10 receives a response from the IC card 20 in either time slot out of the plurality of time slots, the terminal device 10 can recognize which IC card 20 transmitted the response. That is, the terminal device 10 includes a recognition section 46 that recognizes the IC card that transmitted the response based on the time slot in which the terminal device 10 received the response.

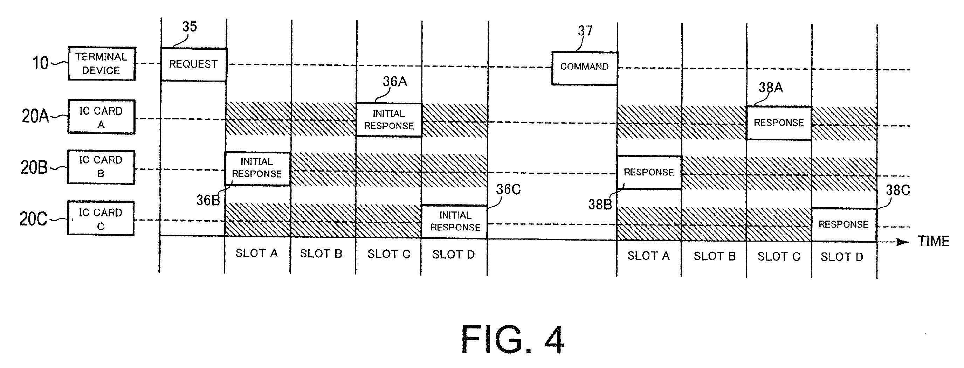

Fig. 4 shows an example of processing in a case that a plurality of the IC cards 20 exists within a communicable range of the terminal device 10. The terminal device 10 transmits an initial response request command 35 in the space at the predetermined interval. When the plurality of the IC cards 20 enters within the communicable range of the resonance section 16 of the terminal device 10, the IC cards 20 will be activated and will be in an idle state. Here, it is shown a case that an IC card 20A, an IC card 20B and an IC card 20C enter within the communicable range of the terminal device 10. When the IC card 20A, the IC card 20B and the IC card 20C enter within the communicable range of the terminal device 10, they receive the initial response request command 35 transmitted from the terminal device 10.

When each of the IC card 20A, the IC card 20B and the IC card 20C receives the initial response request command 35, each of them generates a random number and selects one time slot in accordance with the random number generated. Here, it is shown a case that the IC card 20A selects the third time slot (slot C), the IC card 20B selects the first time slot (slot A), and the IC card 20C selects the fourth time slot (slot D). In addition, the IC card 20A, the IC card 20B and the IC card 20C generate initial responses 36A, 36B and 36C, respectively, to the initial response request command.

The IC card 20A transmits the initial response 36A to the terminal device 10 in the time slot C. The IC card 20A stores information that shows the slot C as the selected time slot information in the nonvolatile memory 28.

And, the IC card 20B transmits the initial response 36B to the terminal device 10 in the time slot A. The IC card 20B stores information that shows the slot A as the selected time slot information in the nonvolatile memory 28.

Further, the IC card 20C transmits the initial response 36C to the terminal device 10 in the time slot D. The IC card 20C stores information that shows the slot D as the selected time slot information in the nonvolatile memory 28.

The terminal device 10 recognizes the IC cards 20A, 20B and 20C in the communicable space of the terminal device 10 based on the initial responses 36A, 36B and 36C. In a case of an example shown in Fig. 4, the terminal device 10 can receive the initial response 36B from the IC card 20B in the time slot A, can receive the initial response 36A from the IC card 20A in the time slot C, and can receive an initial response f36C from the IC card 20C in the time slot D.

Next, the terminal device 10 transmits a command 37 that is a usual processing command to the IC card 20A, the IC card 20B and the IC card 20C in a communicable space of the terminal device 10.

The IC card 20A, the IC card 20B and the IC card 20C receive the command 37 transmitted from the terminal device 10. Each of the IC card 20A, the IC card 20B and the IC card 20C performs processing, that is, a command processing, in accordance with the command received. Further, the IC card 20A, the IC card 20B and the IC card 20C generate responses 38A, 38B and 38C to the command 37 based on a result of the command processing. That is, the IC card 20 includes a command processing section 53 that performs command processing based on the command and generates a response when the receiving section receives the command.

Each of the IC card 20A, the IC card 20B and the IC card 20C transmits the above-mentioned response 38A, 38B, 38C to the terminal device 10 in a time slot selected when the initial response request command 35 was received.

That is, the IC card 20A transmits the response 38A to the terminal device 10 in the time slot C that is shown by the selected time slot information stored in the nonvolatile memory 28. And, the IC card 20B transmits the response 38B to the terminal device 10 in the time slot A that is shown by the selected time slot information stored in the nonvolatile memory. And, the 1C card 20C transmits the response 38C to the terminal device 10 in the time slot D that is shown by the selected time slot information stored in the nonvolatile memory.

As described above, the IC card 20 stores the selected time slot information that shows the slot selected when the initial response request command 35 was received to the nonvolatile memory 28. The IC card 20 replies the response 38 in the slot that the selected time slot information stored in the nonvolatile memory 28 shows, when the IC card 20 received the usual processing command 37 from the terminal device 10. Thereby, even if there is the plurality of IC cards 20 within the communicable range of the terminal device 10, the terminal device 10 can make the plurality of IC cards 20 perform the command processing simultaneously. As a result, the invention can provide an IC card, a reader/writer for IC card that can perform non-contact communication more quickly.

For example, the terminal device 10 may make the plurality of IC cards 20 perform the same write-in command in the case of the primary issue or the secondary issue. In such a case, the terminal device 10 can make the plurality of IC cards 20 perform processing in accordance with the written-in command simultaneously. As a result, the terminal device 10 can raise an efficiency of command processing more.

In above-mentioned explanation, an IC card is explained as a portable electronic device, the portable electronic device, however, may be not only an IC card but also another portable electronic device that carries functions equivalent to the above-mentioned functions carried by the IC card.

Functions in the explained of above-mentioned embodiment are not only constituted using hardware, but can is realized using software. That is, by making a computer read-in a program that described each function, each function can also be realized. In addition, each function may be constituted by either software or hardware suitably selected.

## Claims

1. A reader/writer (10) which transmits a command to an IC card (20) by non-contact communication and make the IC card (20) perform a command processing, the reader/writer (10), comprising:
a command generating section (45) which generates commands including an initial response request command (35) and other command (37) which is transmitted after the initial response request command (35) is transmitted;
a transmitting section (15, 42) which transmits the command generated to a plurality of IC cards (20, 20A, 20B, 20C) within a communicable range of the reader/writer (10);
a time slot setting section (45) which sets up a plurality of time slots (slot A, slot B, slot C, slot D) in which a response from the IC card (20, 20A, 20B, 20C) is received; and
a receiving section (15, 41) which receives the responses transmitted from the IC card (20, 20A, 20B, 20C) including an initial response (36, 36A, 36B, 37C) including an identification information for making the reader/writer identify the IC card (20, 20A, 20B, 20C) to the initial response request command (35) and other response to the other command (37);
**characterized in that**
the command generating section (45) generates the initial response request command (35) which includes the total number of the time slots (slot A, slot B, slot C, slot D) set up by the time slot setting section (15, 45), and the reader/writer (10) further comprises a recognition section (46) which associates and stores the identification information of the IC card (20, 20A, 20B, 20C) that transmitted the initial response (36, 36A, 36B, 36C) and information of the time slot (slot A, slot B, slot C, slot D) in which the initial response was received as correspondence information, and recognizes the IC card (20, 20A, 20B, 20C) which transmitted the other response (38, 38A, 38B, 38C, 38D) based on the correspondence information and the information of the time slot (slot A, slot B, slot C, slot D) in which the other response (38, 38A, 38B, 38C, 38D) was received.

## Patentansprüche

1. Lese-/Schreibvorrichtung (10), welche einen Befehl durch kontaktlose Kommunikation an eine IC-Karte (20) sendet und die IC-Karte (20) veranlasst, eine Befehlsverarbeitung auszuführen, die Lese-/Schreibvorrichtung (10) umfassend:
einen Befehlserzeugungsabschnitt (45), welcher Befehle erzeugt, enthaltend einen Erstantwortanforderungsbefehl (35) und einen anderen Befehl (37), welcher gesendet wird, sobald der Erstantwortanforderungsbefehl (35) gesendet ist;
einen Sendeabschnitt (15, 42), welcher den erzeugten Befehl zu mehreren IC-Karten (20, 20A, 20B, 20C) innerhalb eines Kommunikationsbereichs der Lese-/Schreibvorrichtung (10) sendet;
einen Zeitfenstersetzungsabschnitt (45), welcher mehrere Zeitfenster (Fenster A, Fenster B, Fenster C, Fenster D) setzt, in welchen eine Antwort von der IC-Karte (20, 20A, 20B, 20C) empfangen wird; und
einen Empfangsabschnitt (15, 41), welcher die Antworten, welche von der IC-Karte (20, 20A, 20B, 20C) gesendet sind, enthaltend eine Erstantwort (36, 36A, 36B, 37C), welche eine Kennungsinformation zum Veranlassen der Lese-/Schreibvorrichtung, die IC-Karte (20, 20A, 20B, 20C) zu identifizieren, enthält, auf den Erstantwortanforderungsbefehl (35) und eine andere Antwort auf den anderen Befehl (37) empfängt;
**dadurch gekennzeichnet, dass**
der Befehlserzeugungsabschnitt (45) den Erstantwortanforderungsbefehl (35) erzeugt, welcher die gesamte Zahl der Zeitfenster (Fenster A, Fenster B, Fenster C, Fenster D) enthält, welche durch den Zeitfenstersetzungsabschnitt (15, 45) gesetzt sind, und die Lese-/Schreibvorrichtung (10) des Weiteren einen Erkennungsabschnitt (46) umfasst, welcher die Kennungsinformationen der IC-Karte (20, 20A, 20B, 20C), welche die Erstantwort (36, 36A, 36B, 36C) gesendet hat, und Informationen über das Zeitfenster (Fenster A, Fenster B, Fenster C, Fenster D), in welchem die Erstantwort empfangen wurde, als Übereinstimmungsinformationen verknüpft und speichert, und die IC-Karte (20, 20A, 20B, 20C), welche die andere Antwort (38, 38A, 38B, 38C, 38D) gesendet hat, basierend auf den Übereinstimmungsinformationen und den Informationen über das Zeitfenster (Fenster A, Fenster B, Fenster C, Fenster D), in welchem die andere Antwort (38, 38A, 38B, 38C, 38D) empfangen wurde, erkennt.

## Revendications

1. Dispositif de lecture/écriture (10) qui transmet une commande à une carte CI (20) par une communication sans contact et qui fait exécuter un traitement de la commande par la carte CI (20), le dispositif de lecture/écriture (10) comprenant :
une partie générant des commandes (45) qui génère des commandes incluant une commande de demande de réponse initiale (35) et une autre commande (37) qui est transmise après que la commande de demande de réponse initiale (35) a été transmise ;
une partie de transmission (15, 42) qui transmet la commande générée à une pluralité de cartes CI (20, 20A, 20B, 20C) dans une plage communicable du dispositif de lecture/écriture (10) ;
une partie de définition d'intervalles de temps (45) qui définit une pluralité d'intervalles de temps (intervalle A, intervalle B, intervalle C, intervalle D) au cours desquels une réponse provenant de la carte CI (20, 20A, 20B, 20C) est reçue ; et
une partie de réception (15, 41) qui reçoit les réponses transmises par la carte CI (20, 20A, 20B, 20C) incluant une réponse initiale (36, 36A, 36B, 37C) incluant une information d'identification pour permettre au dispositif de lecture/écriture d'identifier la carte CI (20, 20A, 20B, 20C) en fonction de la commande de demande de réponse initiale (35) et de l'autre réponse à l'autre commande (37) ;
**caractérisé en ce que**
la partie générant des commandes (45) génère la commande de demande de réponse initiale (35) qui inclut le nombre total des intervalles de temps (intervalle A, intervalle B, intervalle C, intervalle D) définis par la partie de définition d'intervalles de temps (15, 45), et le dispositif de lecture/écriture (10) comprend en outre une partie de reconnaissance (46) qui associe et stocke l'information d'identification de la carte CI (20, 20A, 20B, 20C) qui a transmis la réponse initiale (36, 36A, 36B, 36C) et l'information sur l'intervalle de temps (intervalle A, intervalle B, intervalle C, intervalle D) au cours duquel la réponse initiale a été reçue en tant qu'information sur la correspondance, et reconnaît la carte CI (20, 20A, 20B, 20C) qui a transmis l'autre réponse (38, 38A, 38B, 38C, 38D) sur la base de l'information sur la correspondance et de l'information sur l'intervalle de temps (intervalle A, intervalle B, intervalle C, intervalle D) au cours duquel l'autre réponse (38, 38A, 38B, 38C, 38D) a été reçue.
